Europäisches Patentamt

European Patent Office

Office européen des brevets

(11) Numéro de publication: **0 364 644**
**A1**

## (12) DEMANDE DE BREVET EUROPEEN

(21) Numéro de dépôt: 88402619.6

(22) Date de dépôt: 17.10.88

(51) Int. Cl.5: **A01G 9/10 , A01G 5/04**

(43) Date de publication de la demande:
**25.04.90 Bulletin 90/17**

(84) Etats contractants désignés:
**AT BE CH DE ES FR GB GR IT LI LU NL SE**

(71) Demandeur: **Alcaraz, Jean-Michel**
**Quartier Saint-Blaise Route d'Uchaux**
**F-84500 Bollene(FR)**

(72) Inventeur: **Alcaraz, Jean-Michel**
**Quartier Saint-Blaise Route d'Uchaux**
**F-84500 Bollene(FR)**

(74) Mandataire: **Pinguet, André**
**Cabinet de Proprieté Industrielle CAPRI 28**
**bis, avenue Mozart**
**F-75016 Paris(FR)**

(54) Dispositif support pour végétal.

(57) L'affaire consiste à fixer le pied d'un végétal 1, plante séchée ou analogue dans une douille (2), avec collage si nécessaire, et la douille est logée dans la cavité (3) d'un socle (4). L'emballage, la livraison et al présentation du végétal sont simplifiés et améliorés.

*Fig:1*

EP 0 364 644 A1

# DISPOSITIF SUPPORT POUR VEGETAL

La présente invention a pour objet un procédé pour réaliser un support pour une plante épiphyte, le tillandsia (broméliacée), se nourrissant sans racines. L'invention a également pour objet un tel support avec sa plante.

Dans le cadre de la présente invention, le support comporte un élément entourant ou enveloppant la base de la plante, ledit élément étant muni de moyens pouvant resulter simplement et directement de la forme de l'élément, ou d'un organe inclus dans l'élément, pour assurer la fixation de la plante par l'intermédiaire dudit élément, sur un support quelconque pouvant être adapté à la form de l'élément ou à l'organe qu'il contient

Il est déjà connu, par le brevet US 2 837 855 de disposer un bouquet de fleurs séchées dans du sable de couler par dessus un liquide par exemple de la cire, qui durcit sans modifier la présentation du bouquet, qui ainsi devient indéformable. Le but est de maintenir les fleurs séchées dans un vase. Il est connu, également, par la demande de brevet allemand publiée 26 36 395 de fixée des racines de plantes dans une résine durcissable formant une structure cellulaire permettant l'alimentation en eau des racines.

Ces procédés ne visent que certaines plantes et ne permettent pas les manipulations souhaitées dans le cas des plantes telles que les tillandsias.

La présente invention a pour objet un procédé de réalisation d'un élément pour support de plante épiphyte, le tillandsia, dans lequel la racine de la plante est plongée dans un liquide susceptible de durcir, de façon à former un élément de support pour la plante, caractérisé en ce que l'on utilise pour enrober la racine de la plante une résine thermoplastique à base d'EVA (Ethylène - Vinyle - Acétate), ladite résine étant versée dans un moule qu'elle emplit au moins partiellement, à une température où elle est bien liquide, puis on laisse refroidir la résine et lorsque sa température devient voisine de son point de ramollissement, on plonge la racine et la partie inférieure de la plante dans la résine, ce qui provoque la formation d'un élément de support associé à la plante.

L'élément peut avoir, au moins sur la partie inférieure de sa hauteur, une forme cylindrique ou conique, permettant de l'engager dans un trou de forme correspondante, prévu dans un socle. Le trou peut être pratiqué avec une perceuse dans n'importe quel support, planche, meuble, etc.

D'autres caractéristiques et avantages de l'invention apparaîtront au cours de la description qui va suivre, donnée à titre d'exemple non limitatif, en regard des dessins ci-joints, et qui fera bien comprendre comment l'invention peut être réalisée.

Sur les dessins:

la figure 1 est une vue d'ensemble d'un support selon l'ivention, en cours de réalisatioin, avec parties en coupe, certains éléments étant séparés pour une meilleure compréhension,

la figure 2 représente les mêmes éléments à un stade ultérieur du procédé,

la figure 3 est une vue en perspective du support de tillandsia obtenu selon la présente invention,

la figure 4 est une vue analogue a la figure 1 pour une variante de réalisation; et,

les figures 5 à 9 sont de vues en élévation avec parties en coupe, de différentes formes de réalisation de l'invention.

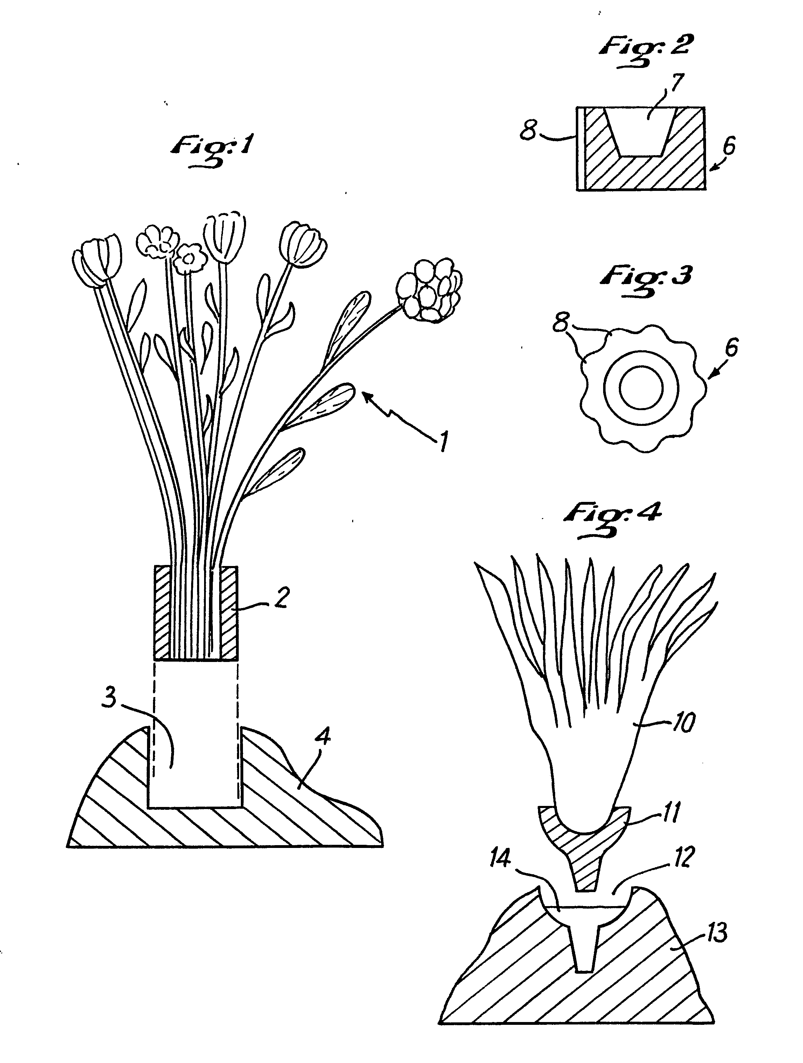

Sur la figure 1, une plante épiphyte, un tillandsia 1, est représentée au-dessus d'un moule 2 (vu en coupe) rempli partiellement d'une résine liquide 3. On utilise selon la présente invention une résine thermoplastique du type EVA (Etylène - Vinyle - Acétate). Ces résines se trouvent partout dans le commerce, sous différentes marques, entre autre, les résines "HOT MELT adhésives".

Selon les qualités, les dosages et les charges, les températures de ramollissement s'échelonnent de 60 à 180° C. Toutes ces résines sont liquides a 200° C.

Selon l'invention on coule dans un moule de forme choisie (selon des critères développés ci-après) la résine à l'état liquide, jusqu'à un niveau permettant de recevoir dans le liquide la partie de la plante que l'on désire enrober. Ce niveau peut être déterminée expérimentalement sans aucune difficulté : un léger exces conduit a une bavure qui peut être enlevée simplement. On laisse refroidir la résine liquide, jusqu'à sa température de ramollissement. A ce moment, (figure 2) on plonge le bas de la plante dans la résine, dont la niveau remonte en conséquence, et qui durcit rapidement (de 1 à 2 minutes). Après durcissement, on démoule (fig. 3). On obtient un tillandsia 1 avec un support 4, qui peut être logé dans tout ensemble décoratif présentant un trou correspondant à la forme du support.

Les résines du type ci-dessus conviennent particulièrement bien au but de la présente invention. On choisit de préférence des résines ayant un point de ramollissement situé entre 60 et 70° C. Cette température appliquée passagèrement n'a aucun effet défavorable sur le tillandsia qui reste parfaitement vivant. Cette résine adhere parfaitement sur le tissu végétal du tillandsia, sans aucun effet chimique d'empoisonnement de la plante.

Le support 4 peut être cylindrique, ou conique (ou toute forme désirée). Une forme avantageuse est la forme cylindrique, avec des stries ou nervures axiales sur la surface cylindrique, pour faciliter l'introduction et le calage du support dans un trou cylindrique approprié, facile à forer avec une perceuse ou un villebrequin. On peut ainsi composer individuellement tout motif décoratif personnalise.

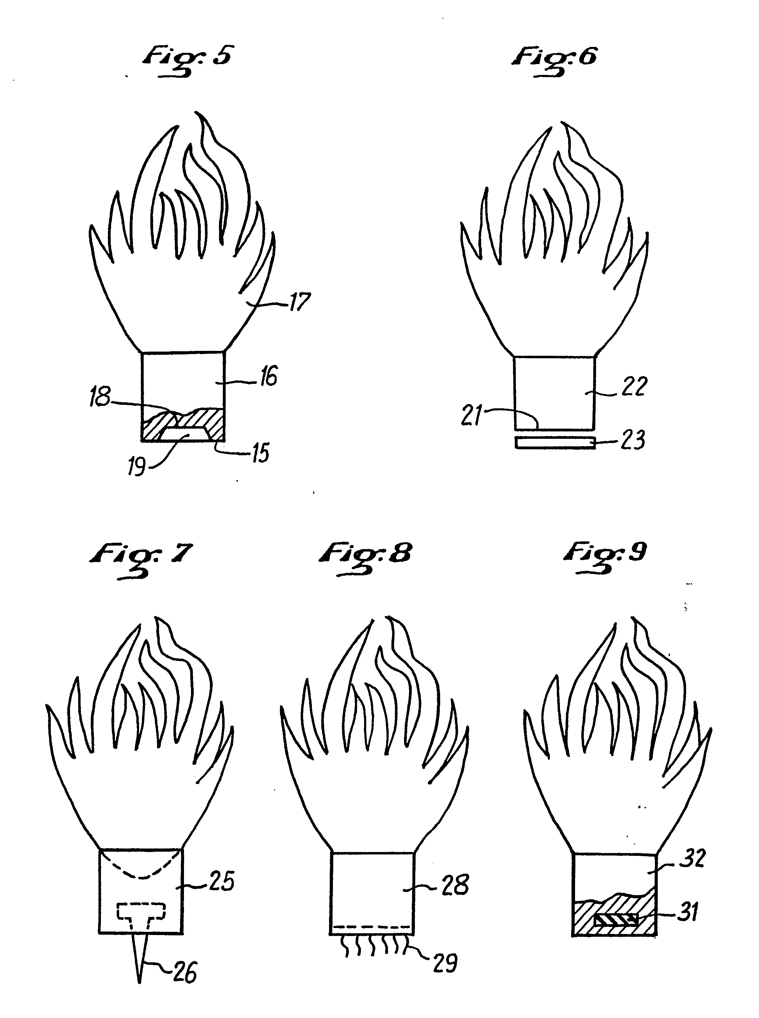

Dans la variante représentée sur la figure 4, un tillandsia 10, a sa base enrobée dans un élément 11 en résine moulée, de forme correspondant à celle d'une cavité 12 formée dans un socle 13. Pour réaliser l'élément 11, un procédé simple consiste à utiliser un moule présentant une cavité identique à la cavité 12 du socle 13, à placer dans cette cavité une quantité suffisante de résine 14 et enfoncer ensuite la base de la plante dans la cavité du moule, ce qui fait remonter la résine. Quand celle-ci est durcie, l'ensemble de la plante avec son élément de support est démoulé.

Dans une variante (figure 5), la surface inférieure 15 d'un élément support 16 d'une plante 17 est formée avec une cavité 18 peu profonde qui peut être remplie jusqu'à déborder d'un adhésif 19. En plaçant l'élément 16 sur une surface quelconque, horizontale, verticale, en bois, métal, verre, ou autre, il se fixe par séchage de la colle.

Dans la variante représentée sur la figure 6, la surface inférieure 21 de l'élément 22 est lisse. L'élément peut être fixé par une pastille 23 collante double face.

Le support 25 de la figure 7 comporte à sa base une pointe 26 qui peut être constituée par exemple par une pièce métallique du genre clou ou punaise dont la tête est noyée sans la matière moulée de l'élément 25.

Sur la figure 8, l'élément 28 comporte à sa base des reliefs 29 du genre Velcro, qui permettent la fixation sur un tissu, spécial ou non.

Une autre façon de fixer l'élément support peut être obtenue comme représenté sur la figure 9. Un petit aimant 31 est enrobé dans la matière moulée de l'élément 32. L'aimant peut affleurer la surface ou être complètement enrobe et recouvert d'une pellicule de matière moulée. On peut ainsi fixer la plante avec son support sur n'importe quelle surface ferromagnétique, par exemple sur une armoire frigorifique.

**Revendications**

1- Procédé de réalisation d'un élément pour support de plante epiphyte, le tillandsia, dans lequel la racine de la plante est plongée dans un liquide susceptible de durcir, de façon à former un élément de support pour la plante, caractérisé en ce que l'on utilise pour enrober la racine de la plante une résine thermoplastique à base d'EVA (Ethylène -Vinyle - Acétate), ladite résine étant versée dans un moule qu'elle emplit au moins partiellement, à une température où elle est bien liquide, puis on laisse refroidir la résine et lorsque sa température devient voisine de son point de ramollissement, on plonge la racine et la partie inférieure de la plante dans la résine, ce qui provoque la formation d'un élément de support associé à la plante.

2 - Elément de support pour tillandsia, associé à une tillandsia, obtenu conformément au procédé de la revendication 1.

3 - Elément de support avec tillandsia, selon la revendication 2, caractérisé en ce qu'il comporte des moyens pouvant résulter simplement et directement de la forme de l'élément, ou d'un organe (26, 29, 31) inclus dans l'élément, pour assurer la fixation de la plante par l'intermédiaire dudit élément, sur un support quelconque (4, 13) pouvant être adapté à la forme de l'élément ou à l'organe qu'il contient.

4 - Elément, de support selon la revendication 3, caractérisé en ce que l'élément a, au moins sur la partie inférieure de sa hauteur, une forme cylindrique (2), permettant de l'engager dans un trou de forme cylindrique correspondante prévu dans un socle.

5 - Elément de support selon la revendication 3, caractérisé en ce que l'élément a, au moins sur la partie inférieure de sa hauteur, une forme conique (11), permettant de l'engager dans un trou (12) de forme conique correspondante prévu dans un socle.

6 - Elément de support selon une des revendications 4 ou 5, caractérisé en ce que la surface latérale de l'élément comporte des rainures (8) ou nervures en vue de faciliter ou d'améliorer le calage de l'élément dans le trou d'un socle.

7 - Elément de support selon une des revendications 2 à 6, caractérisé en ce que l'élément comporte dans la surface de sa base une cavité (18) permettant de recevoir un adhésif (19), en vue de la fixation de l'élément sur une surface plane.

8 - Elément de support selon une des revendications 2 à 6, caractérisé en ce que la surface inférieure de l'élément (22) est plane, de façon à permettre sa fixation par adhésif, notamment au moyen d'une pastille adhésive double face.

9 - Elément de support selon une des revendications 2 à 6, caractérisé en ce que la surface inférieure de l'élément (25, 28) comporte une pointe (26), pouvant être enfoncée dans une surface de dureté inférieure à celle de la pointe.

10 - Elément de support selon une des revendications 2 à 6, caractérisé en ce que la surface inférieure de l'élément comporte un relief constitué par une matière (29) du type Velcro, permettant la fixation de l'élément sur un tissu approprié.

11 - Elément de support selon une des revendications 2 à 6, caractérisé en ce qu'un corps magnétique (31) est enrobé dans l'élément (32) au voisinage de sa surface inférieure, ou affleurant celle-ci, pour permettre la fixation de l'élément sur un support métallique.

*Fig:1*

*Fig:2*

*Fig:3*

*Fig:4*

_Fig. 5_

17

16

18

19  15

_Fig. 6_

22

21  23

_Fig. 7_

25

26

_Fig. 8_

28

29

_Fig. 9_

32

31

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | FR-A-2266456 (BOMBA) <br> * page 4, ligne 1 - page 6, ligne 18 * <br> --- | 1 | A01G9/10 <br> A01G5/04 |
| A | GB-A-2193909 (TRIFOAM PRODUCTS) <br> * page 1, ligne 5 - page 2, ligne 78; figures 1-4 * <br> --- | 1 | |
| A | US-A-3310912 (MELANDER) <br> * le document en entier * <br> --- | 1, 3 | |
| A | US-A-4117628 (SMITH) <br> * colonne 3, ligne 21 - colonne 4, ligne 64; figures 1-14 * <br> --- | 3-6 | |
| A | DE-U-8528563 (POTHMANN) <br> * le document en entier * <br> --- | 9, 11 | |
| A | US-A-3336697 (DAVIS) <br> * colonne 2, ligne 25 - ligne 65; figures 1, 9 * <br> --- | 7, 8 | |
| A | DE-A-2949420 (EYNOTHEN) <br> * page 4, ligne 28 - page 5, ligne 9; figures 1-2 * <br> --- | 1, 4 | DOMAINES TECHNIQUES RECHERCHES (Int. Cl.4 ) |
| A | DE-A-2015209 (MAIER) <br> * page 1, dernier alinéa - page 2, dernier alinéa * <br> * page 4, alinéa 1 - page 5, alinéa 3; figures 1-6 * <br> ----- | 3, 4 | A01G <br> A47G |

Le présent rapport a été établi pour toutes les revendications

| Lieu de la recherche | Date d'achèvement de la recherche | Examinateur |
|---|---|---|
| LA HAYE | 02 JUIN 1989 | HERYGERS J.J. |